# EUROPEAN PATENT SPECIFICATION

(11) **EP 4 325 790 B1**
(45) Date of publication and mention of the grant of the patent: **26.03.2025**
(21) Application number: 21942203.7
(22) Date of filing: 24.05.2021
(51) Int. Cl.: G06F 21/85, G06F 21/64

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(43) Date of publication of application: 21.02.2024
(73) Proprietor: Huawei Technologies Co., Ltd., Shenzhen, Guangdong 518129 (CN)
(72) Inventor: LIU, Junlong, Shenzhen, Guangdong 518129 (CN)
(74) Representative: Gill Jennings & Every LLP
(86) International application number: PCT/CN2021/095608
(87) International publication number: WO 2022/246614

(56) References cited:
- EP-A1- 3 276 899
- CN-A- 105 653 481
- CN-A- 112 422 492
- US-A1- 2020 151 362
- US-A1- 2021 124 706
- US-B1- 8 995 302

## Description

### TECHNICAL FIELD

This application relates to the field of communication technologies, and in particular, to a data transmission method and an apparatus.

### BACKGROUND

Generally, to meet different computing function requirements in a computing device, integrated circuits (integrated circuits, ICs) that can implement different computing functions are integrated into the computing device. In the industry, the ICs (for example, graphics processing units (GPUs), network adapters, and graphics cards) integrated into the computing device are usually interconnected through a high-speed serial computer extended bus standard (e.g., peripheral component interconnect express, PCIe) bus. In a big data era, there is an urgent need for privacy protection technologies that support computing data intensive (computing data intensive, CDI). Computing tasks from machine learning model training and inference to supporting autonomous driving are usually implemented by a large computing system that centers on a central processing unit (central processing unit, CPU) interconnected with endpoint devices such as various accelerators or dedicated devices through the PCIe bus. Mutual communication between the CPU and the endpoint devices, and between the endpoint devices is more frequent. Therefore, security of the mutual communication between points on the PCIe bus becomes increasingly important.

Currently, the following manner is mainly used for security control for mutual access between nodes on the PCIe bus: A sending device uses a transaction layer packet (transaction layer packet, TLP) packet specified in the PCIe protocol to carry an integrity check value (integrity check value) of data access corresponding to the current TLP packet, and then determines, based on a result of checking the integrity check value at a receive end, whether the data access corresponding to the current TLP packet is valid.

However, adding the integrity check value to the TLP packet inevitably increases packet overheads of the PCIe bus, thereby reducing effective bandwidth utilization of the PCIe bus. In addition, a design requirement for a PCIe device that supports a calculation and check mechanism of the integrity check value is high. In conclusion, in an existing solution, the security control for the mutual access between the nodes on the PCIe bus completely depends on the integrity check value, and flexibility is low.
US2020151362 discloses a system which may include a root port and an endpoint upstream port. The root port may include transaction layer hardware circuitry to determine, by logic circuitry at a transaction layer of a protocol stack of a device, that a packet is to traverse to a link partner on a secure stream, authenticate a receiving port of the link partner, configure a transaction layer packet (TLP) prefix to identify the TLP as a secure TLP, associating the secure TLP with the secure stream, apply integrity protection and data encryption to the Secure TLP, transmit the secure TLP across the secure stream to the link partner.

### SUMMARY

Embodiments of this application provide a data transmission method and an apparatus, to improve flexibility of security control for mutual access between nodes on a PCIe bus.

To achieve the foregoing objective, this application uses the following technical solutions.

According to a first aspect, a data transmission method is provided. The method is applied to a root node or a child parent node in a PCIe topology tree corresponding to a PCIe bus. Specifically, the method includes the following steps: receiving a transmission packet sent by a sending device, where the sending device includes any one of the root node, the child parent node, or an endpoint device, the endpoint device is connected to the root node or the child parent node, and the root node is connected to a system memory manager; and when determining, based on pre-obtained security configuration information, that the transmission packet is valid, transmitting the transmission packet to a next device, where the transmission packet is a TLP packet. In the data transmission method provided in this embodiment of this application, a PCIe security control apparatus mainly checks whether the transmitted TLP packet is valid by using preset security configuration information, where the security configuration information may be flexibly configured. Therefore, content of the TLP packet does not need to be changed. In comparison with a current technology, a prefix and an integrity check value do not need to be added to the TLP packet. Therefore, dependency on the prefix and the integrity check value is reduced, and a requirement for a PCIe device to support a calculation and check mechanism of the integrity check value is lowered. In addition, packet overheads of the PCIe bus are not increased, so that flexibility is higher. In addition, because the security configuration information may be flexibly configured, in comparison with setting a fixed prefix and a fixed integrity check value, a risk of a defective solution design of the prefix and the integrity check value being spoofed can be reduced.

In a possible implementation solution, before the determining, based on pre-obtained security configuration information, that the transmission packet is valid, the method further includes: obtaining a configuration access request, and when determining that the configuration access request is from an operating system in a trusted execution environment TEE, obtaining the security configuration information carried in the configuration access request, where the configuration access request is a TLP packet. Moreover, to ensure security of the obtained security configuration information, in this embodiment of this application, a security configuration interface may be provided for trusted system software, so that a security mechanism of each node in the entire PCIe topology tree can be configured more flexibly. The security configuration information may be configured and controlled by secure and trusted system software (trusted system software in the TEE) on a processor CPU. In this way, when the security configuration information is a TLP packet for one or more specific leaf nodes in the PCIe topology tree, enclave protection for the one or more specific leaf nodes in the PCIe topology tree may be provided.

In a possible implementation solution, before the determining, based on pre-obtained security configuration information, that the transmission packet is valid, the method further includes: obtaining a configuration packet in configuration space of the root node or the child parent node, where the configuration packet includes security check information, and when determining that the security check information is valid, obtaining the security configuration information carried in the configuration packet, where the configuration packet is a TLP packet. The security configuration information of the PCIe security control apparatus is implemented in the configuration space of the root node or the child parent node. Specifically, the security configuration information is implemented in type 1 configuration space of a PCIe root port (PCIe root port) of a PCIe root complex used as the root node or configuration space of an upstream port or a downstream port of a PCIe switch used as the child parent node, or the security configuration information is configured by using an indirect access programming interface provided by a register group implemented in the configuration space of a parent node or the child parent node. In this case, the security configuration information is configured by using the configuration packet. The corresponding configuration packet needs to include the security check information. The security configuration information configuration carried in the configuration packet is allowed to take effect only when the security check information is valid; otherwise, the configuration does not take effect. The trusted system software (for example, software running on the TEE) needs to determine, based on whether the access is a secure access, whether to carry the security check information in the configuration packet.

In a possible implementation solution, before the determining, based on pre-obtained security configuration information, that the transmission packet is valid, the method further includes: obtaining a memory packet generated by a processor CPU, where the memory packet includes a memory packet that carries security check information, and when determining that the security check information is valid, obtaining the security configuration information carried in the memory packet, where the memory packet is a TLP packet. In this case, the security configuration information of the PCIe security control apparatus is implemented in base address register space (BAR space) of the root node or the child parent node. Specifically, this is implemented in the base address register space (BAR space) of the PCIe root port of the PCIe root complex used as the root node or the upstream port or the downstream port of the PCIe switch used as the child parent node. In this case, the security configuration information of the PCIe security control apparatus needs to be configured by using a PCIe memory packet (Memory TLP, which may be specifically a PCIe memory write packet (PCIe Memory Write TLP, PCIe MemWr TLP)), where a prefix of the MemWr TLP packet needs to include the security check information. When it is determined that the security check information is valid, the security configuration information carried in the Mem Wr TLP packet is obtained.

In a possible implementation solution, a destination address of the transmission packet is the root node, the security configuration information includes one or more to-be-matched requester identifiers, and the determining, based on pre-obtained security configuration information, that the transmission packet is valid includes: when determining that a first requester identifier in the transmission packet is one of the one or more to-be-matched requester identifiers, determining that the transmission packet is valid. In this solution, if the destination address of the transmission packet is the root node (for example, the PCIe root complex), the transmission packet is an upstream data flow, and the PCIe security control apparatus determines validity of the transmission packet based on whether the first requester identifier in the transmission packet is one of the one or more to-be-matched requester identifiers. In addition, the PCIe security control apparatus may also determine, based on the security configuration information, whether to perform another security check, including but not limited to determining whether to search for a security table through indexing based on the requester identifier of the transmission packet, obtaining information of the security table to check whether a requester corresponding to the requester identifier has permission to access corresponding space, and what the specific permission is, and the like.

In a possible implementation solution, a destination address of the transmission packet is the root node, the security configuration information includes one or more to-be-matched requester identifiers and one or more security items that are in a one-to-one correspondence with the one or more to-be-matched requester identifiers, and the determining, based on pre-obtained security configuration information, that the transmission packet is valid includes: searching for a first security item through indexing based on the security configuration information and a first requester identifier in the transmission packet, checking the transmission packet based on content of the first security item, and determining that the transmission packet is valid after the check succeeds. In this solution, if the destination address of the transmission packet is the root node (for example, the PCIe root complex), the transmission packet is the upstream data flow. An upstream security table includes the one or more to-be-matched requester identifiers (requester IDs) and the one or more security items that are in the one-to-one correspondence with the one or more to-be-matched requester identifiers. In the security table, the requester identifiers are used as indexes of all the security items. Specifically, the PCIe security control apparatus searches for the first security item through indexing based on the security configuration information and the first requester identifier in the transmission packet, checks the transmission packet based on the content of the first security item, and determines that the transmission packet is valid after the check succeeds. Content of the security item in the upstream security table may include information such as security information and whether to use a security page table. The security information includes whether the transmission packet corresponding to the requester identifier (requester ID) is allowed to access secure space of a memory, whether a security attribute of the accessed memory space (for example, memory space in a secure world or memory space in a normal world) is determined by using a page table, or is directly controlled by configuration of the security item, and the like. The security item may further store control information such as whether the transmission packet corresponding to the requester identifier (requester ID) needs a specific security page table and whether the page table needs to be queried.

In a possible implementation solution, a destination address of the transmission packet is the endpoint device, the security configuration information includes one or more to-be-matched root port numbers, and the determining, based on pre-obtained security configuration information, that the transmission packet is valid includes: when determining that a first root port number in the transmission packet is one of the one or more to-be-matched root port numbers, determining that the transmission packet is valid. In this solution, if the destination address of the transmission packet is the endpoint device, the transmission packet is a downstream data flow, and the PCIe security control apparatus determines the validity of the transmission packet based on whether the first root port number in the transmission packet is one of the one or more to-be-matched root port numbers.

In a possible implementation solution, a destination address of the transmission packet is the endpoint device, the security configuration information includes one or more to-be-matched root port numbers and one or more security items that are in a one-to-one correspondence with the one or more to-be-matched root port numbers, and the determining, based on pre-obtained security configuration information, that the transmission packet is valid includes: searching for a second security item through indexing based on the security configuration information and a first root port number in the transmission packet, checking the transmission packet based on content of the second security item, and determining that the transmission packet is valid after the check succeeds. In this solution, if the destination address of the transmission packet is the endpoint device, the transmission packet is the downstream data flow. A downstream security table includes the one or more to-be-matched root port (root port) numbers and the one or more security items that are in a one-to-one correspondence with the one or more to-be-matched root port numbers. In a security item table, the root port numbers are used as indexes of all the security items. Specifically, the PCIe security control apparatus searches for the second security item through indexing based on the security configuration information and the first root port number in the transmission packet, checks the transmission packet based on the content of the second security item, and determines that the transmission packet is valid after the check succeeds. The PCIe security control apparatus on the child parent node at the last level may alternatively determine the validity of the transmission packet only by using the root port (root port) number, and does not use the downstream security table; or may search for the security items through indexing in the downstream security table by using any one of a bus number, a device number, or a function number of a leaf node (the endpoint device).

In a possible implementation solution, the transmission packet includes a security signature configured by the root node based on the security configuration information; and the checking the transmission packet based on content of the second security item includes: checking the security signature of the transmission packet based on the content of the second security item. In this solution, content of the security item in the downstream security table includes a security signature corresponding to the root port (root port) number, and may further include content such as a security level. For a data flow output from the root node (for example, the PCIe root complex), a corresponding security item of the downstream security table is searched for through indexing based on an output root port number, so that it is determined, based on content of the corresponding security item, whether to mark a security signature for the transmission packet. The security signature of the transmission packet may be placed in a vendor-defined type 1 prefix. The PCIe security control apparatuses corresponding to all child parent nodes in the topology tree need to identify the type 1 prefix of the transmission packet sent by the PCIe root complex, and parse the type 1 prefix according to provisions of the present invention.

According to a second aspect, a PCIe security control apparatus is provided, applied to a root node or a child parent node in a PCIe topology tree corresponding to a PCIe bus. The apparatus includes: a receiving unit, configured to receive a transmission packet sent by a sending device, where the sending device includes any one of the root node, the child parent node, or an endpoint device, the endpoint device is connected to the root node or the child parent node, and the root node is connected to a system memory manager; and a processing unit, configured to: when determining, based on pre-obtained security configuration information, that the transmission packet is valid, transmit the transmission packet to a next device through a sending unit, where the transmission packet is a TLP packet.

In a possible implementation solution, the processing unit is further configured to: obtain a configuration access request, and when determining that the configuration access request is from an operating system in a trusted execution environment TEE, obtain the security configuration information carried in the configuration access request, where the configuration access request is a TLP packet.

In a possible implementation solution, the processing unit is further configured to: obtain a configuration packet in configuration space of the root node or the child parent node, where the configuration packet includes security check information, and when determining that the security check information is valid, obtain the security configuration information carried in the configuration packet, where the configuration packet is a TLP packet.

In a possible implementation solution, the processing unit is further configured to: obtain a memory packet generated by a CPU, where the memory packet includes a memory packet that carries security check information, and when determining that the security check information is valid, obtain the security configuration information carried in the memory packet, where the memory packet is a TLP packet.

In a possible implementation solution, a destination address of the transmission packet is the root node, the security configuration information includes one or more to-be-matched requester identifiers, and the processing unit is specifically configured to: when determining that a first requester identifier in the transmission packet is one of the one or more to-be-matched requester identifiers, determine that the transmission packet is valid.

In a possible implementation solution, a destination address of the transmission packet is the root node, the security configuration information includes one or more to-be-matched requester identifiers and one or more security items that are in a one-to-one correspondence with the one or more to-be-matched requester identifiers, and the processing unit is specifically configured to: search for a first security item through indexing based on the security configuration information and a first requester identifier in the transmission packet, check the transmission packet based on content of the first security item, and determine that the transmission packet is valid after the check succeeds.

In a possible implementation solution, a destination address of the transmission packet is the endpoint device, the security configuration information includes one or more to-be-matched root port numbers, and the processing unit is specifically configured to: when determining that a first root port number in the transmission packet is one of the one or more to-be-matched root port numbers, determine that the transmission packet is valid.

In a possible implementation solution, a destination address of the transmission packet is the endpoint device, the security configuration information includes one or more to-be-matched root port numbers and one or more security items that are in a one-to-one correspondence with the one or more to-be-matched root port numbers, and the processing unit is specifically configured to: search for a second security item through indexing based on the security configuration information and a first root port number in the transmission packet, check the transmission packet based on content of the second security item, and determine that the transmission packet is valid after the check succeeds.

In a possible implementation solution, the transmission packet includes a security signature configured by the root node based on the security configuration information; and the processing unit is specifically configured to check the security signature of the transmission packet based on the content of the second security item.

According to a third aspect, a PCIe bus is provided. The PCIe security control apparatus provided in the second aspect is applied to a root node or a child parent node in a PCIe topology tree corresponding to the PCIe bus.

According to a fourth aspect, an electronic device is provided, including the PCIe bus according to the third aspect, where an endpoint device is connected to a memory of the electronic device through the PCIe bus.

For technical effects brought by any one of possible implementations in the second aspect, the third aspect, and the fourth aspect, refer to technical effects brought by the foregoing different implementations of the first aspect. Details are not described herein again.

### BRIEF DESCRIPTION OF DRAWINGS

FIG. 1 is a schematic diagram of a TLP packet according to an embodiment of this application;
FIG. 2 is a schematic diagram of a structure of an electronic device according to an embodiment of this application;
FIG. 3 is a schematic flowchart of a data transmission method according to an embodiment of this application;
FIG. 4 is a schematic diagram of a configuration method of a register group according to an embodiment of this application;
FIG. 5 is a schematic diagram of a method for obtaining security configuration information according to an embodiment of this application;
FIG. 6 is a schematic diagram of a TLP packet according to another embodiment of this application;
FIG. 7 is a schematic diagram of a TLP packet according to still another embodiment of this application;
FIG. 8 is a schematic diagram of a PCIe topology structure according to an embodiment of this application;
FIG. 9 is a schematic diagram of a data transmission method according to another embodiment of this application;
FIG. 10 is a schematic diagram of a PCIe topology structure according to another embodiment of this application;
FIG. 11 is a schematic diagram of a TLP packet according to yet another embodiment of this application;
FIG. 12 is a schematic diagram of a data transmission method still according to another embodiment of this application;
FIG. 13 is a schematic diagram of a computing system according to an embodiment of this application;
FIG. 14 is a schematic diagram of a method for switching an endpoint device EP from an REE to a TEE according to an embodiment of this application;
FIG. 15 is a schematic diagram of a method for exiting a TEE by an endpoint device EP according to an embodiment of this application; and
FIG. 16 is a schematic diagram of a structure of a PCIe security control apparatus according to an embodiment of this application.

### DESCRIPTION OF EMBODIMENTS

The following describes technical solutions in embodiments of this application with reference to the accompanying drawings in embodiments of this application. It is clear that the described embodiments are merely a part rather than all of embodiments of this application.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise stated, "a plurality of" means two or more than two.

Generally, to meet different computing function requirements in a computing device, integrated circuits (integrated circuits, ICs) that can implement different computing functions are integrated into the computing device. In the industry, the ICs (for example, graphics processing units (GPUs), network adapters, and graphics cards) integrated into the computing device are usually interconnected through a high-speed serial computer extended bus standard (e.g., peripheral component interconnect express, PCIe) bus. In a big data era, there is an urgent need for privacy protection technologies that support computing data intensive (computing data intensive, CDI). Computing tasks from machine learning model training and inference to supporting autonomous driving are usually implemented by a large computing system that centers on a central processing unit (central processing unit, CPU) interconnected with endpoint devices such as various accelerators or dedicated devices through the PCIe bus. Mutual communication between the CPU and the endpoint devices, and between the endpoint devices is more frequent. Therefore, security of the mutual communication between points on the PCIe bus becomes increasingly important.

Currently, the following manner is mainly used for security control for mutual access between nodes on the PCIe bus: A sending device uses a transaction layer packet (transaction layer packet, TLP) packet specified in the PCIe protocol to carry an integrity check value (integrity check value) of data access corresponding to the current TLP packet, and then determines, based on a result of checking the integrity check value at a receive end, whether the data access corresponding to the current TLP packet is valid.

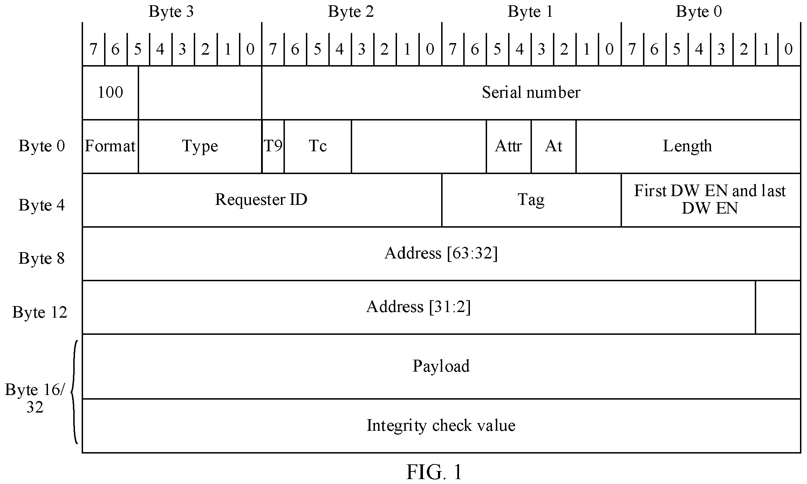

With reference to FIG. 1, a structure of a TLP packet is provided, and specifically includes: a prefix field, where 100 is a prefix identifier, and the prefix field carries a packet number (packet number) and carries an integrity check value (integrity check value) after a payload (payload) of the packet. A receive end specifically checks, based on the packet number and the integrity check value, whether data access corresponding to the current TLP packet is valid. In addition, the TLP packet usually further includes other fields, for example, a format (fmt) field and a type (type) field. Generally, the format (fmt) field is used for determining whether the current TLP packet is 3 double words (double words, DWs) or 4 DWs, and whether the current TLP packet includes data; and the type (type) field is used for determining a type requested by the current TLP packet. The format (fmt) field and the type (type) field together determine a transaction type of the current TLP packet (where for example, the current TLP packet is a memory read request (memory read request, MRd), a memory read lock request (memory read lock request), a memory write request (memory write request, MWr), a config type0 read request (config type0 read request, CfgRd0), a config type1 read request (config type1 read request, CfgRd1), a config type0 write request (config type0 write request, CfgWr0), a config type1 write request (config type1 write request, CfgWr1), and the like, which are listed herein only for example, and it is clear that there are other transaction types). A T9 field indicates a ninth symbol. A Tc field indicates a transmission type of the current TLP packet. The PCIe bus specifies eight transmission types, and a specific classification of all the transmission types is related to QoS of the PCIe bus. An Attr field includes three sign bits, where a second bit indicates whether the current TLP supports ID-based ordering (ordering based on an identifier) of the PCIe bus; a first bit indicates whether relaxed ordering is supported (no sequence requirement); and a zeroth bit indicates whether cache (Cache) sharing consistency processing needs to be performed when the current TLP reaches a memory through a PCIe root complex (root complex, RC). An AT field is a reserved field and is used for address translation related to an input/output memory manager (input/output memory management unit, IOMMU) system. A length (length) field is used for describing a size of the payload (payload) of the current TLP, and a unit is DW. A requester ID (requester ID) field includes a bus number (bus number), a device number (device number), and a function number (function number) of a PCIe device that generates the current TLP packet, where the device number is optional. A tag (Tag) field is used for returning a completion packet for the current TLP packet, to provide a correspondence between the current TLP packet and the completion packet. The first (first) and last (last) DW enable (enable, EN) fields are further included. The PCIe bus transmits data in a basic unit of byte, but the Length field uses the minimum unit of DW. Therefore, the first DW EN and the last DW EN fields are used for enabling the byte function in the TLP packet, so that valid data in the TLP packet is in the unit of byte. Each of the two DW EN fields includes four bits. Each bit of the last DW EN field corresponds to a byte enable bit of the last double word in a data payload, and each bit of the first DW EN field corresponds to a byte enable bit of the first double word in the data payload. An address [63:32] field and an address [31:2] field indicate that the current TLP packet uses a memory of a 64-bit width, that is, 4 DWs. When the current TLP packet uses a memory of a 32-bit width (3 DWs), the current TLP packet includes only the address [31:2] field. The foregoing mainly describes all fields in the typical TLP packet shown in FIG. 1. It is clear that when different transactions are processed, the TLP packet may further have other fields or some fields in the foregoing fields may be omitted.

However, adding the prefix and the integrity check value to the TLP packet inevitably increases packet overheads of the PCIe bus, thereby reducing effective bandwidth utilization of the PCIe bus. In addition, a design requirement for the PCIe device that supports a calculation and check mechanism of the integrity check value is high. In conclusion, in the TLP packet solution shown in FIG. 1, security control for mutual access between nodes on the PCIe bus completely depends on the prefix and the integrity check value, and flexibility is low.

To resolve the foregoing problem, in a data transmission method provided in this embodiment of this application, a PCIe security control apparatus mainly checks whether a transmitted TLP packet is valid by using preset security configuration information, where the security configuration information may be flexibly configured. Therefore, content of the TLP packet does not need to be changed. In comparison with a current technology, the prefix and the integrity check value do not need to be added to the TLP packet that is mainly used for data transmission. Therefore, dependency on the prefix and the integrity check value is reduced, and a requirement for the PCIe device to support a calculation and check mechanism of the integrity check value is lowered. In addition, the packet overheads of the main transmission data of the PCIe bus are not increased, so that the flexibility is higher. In addition, because the security configuration information may be flexibly configured, in comparison with setting a fixed prefix and a fixed integrity check value, a risk of a defective solution design of the prefix and the integrity check value being spoofed can be reduced. Moreover, the security configuration information may come from an operating system in a trusted execution environment (trusted execution environment, TEE), or a security check is first performed on the security configuration information, and after the security check succeeds, a check is performed on whether the TLP packet is valid, so that security of the mutual access based on the TLP packet between the nodes on the PCIe bus. This avoids a security risk caused by other devices using insecure software to access base address register (BAR) space of a device that does not belong to the devices through the CPU.

First, an application scenario of this embodiment of this application is described as follows.

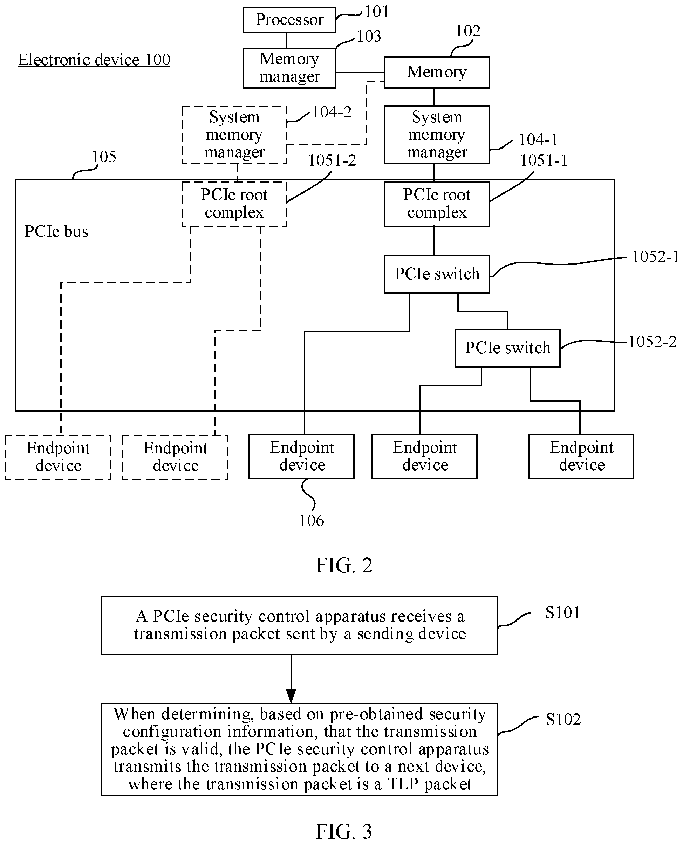

Refer to FIG. 2. This embodiment of this application provides an electronic device 100. The electronic device 100 may be different types of electronic devices such as a mobile phone, a tablet, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, a vehicle-mounted device, a smart vehicle, a smart speaker, a robot, and smart glasses.

FIG. 2 is a schematic diagram of a structure of the electronic device 100 according to an embodiment of this application. As shown in FIG. 2, the electronic device 100 may include a processor 101, a memory 102, a memory manager unit (memory management unit, MMU) 103, a system memory manager unit (system memory management unit, SMMU) 104 (or an input/output memory manager unit, input/output memory management unit, IOMMU), a PCIe bus 105, and an endpoint device 106. It may be understood that the structure shown in this embodiment does not constitute a specific limitation on the electronic device 100. In some other embodiments, the electronic device 100 may include more or fewer components than those shown in the figure, or some components may be combined, or some components may be split, or different component arrangements may be used. For example, the electronic device may further include an external memory interface, a universal serial bus (universal serial bus, USB) interface, a charging management module, a power management module, a battery, an antenna, a mobile communication module, a wireless communication module, an audio module, a speaker, a receiver, a microphone, a headset interface, a sensor module, a button, a vibration motor camera, a display, a subscriber identity module (subscriber identification module, SIM) card interface, an indicator, and the like.

The processor 101 may include one or more processing units. For example, the processor may include an application processor (application processor, AP), a modem processor, a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The processor may be a nerve center and a command center of the electronic device 100. The processor may generate an operation control signal based on instruction operation code and a timing signal to complete control of reading instructions and executing instructions.

The memory may be further disposed in the processor 101, and is configured to store instructions and data. In some embodiments, the memory in the processor 101 is a high-speed buffer storage (for example, a cache). The memory may store instructions or data just used or cyclically used by the processor 101. If the processor 101 needs to use the instructions or the data again, the processor 101 may directly invoke the instructions or the data from the memory. This avoids repeated access and reduces waiting time of the processor 101, thereby improving system efficiency.

In some embodiments, the processor 101 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The memory 102 may be configured to store computer-executable program code, where the executable program code includes instructions. The processor 101 runs the instructions stored in the memory 102, to perform various function applications and data processing of the electronic device 100. For example, in this embodiment of this application, the processor 101 may execute the instructions stored in the memory 102, and the memory 102 may include a program storage area and a data storage area.

The program storage area may store an operating system, an application program required by at least one function (for example, a client application (client application, CA), a trusted application (trusted application, TA), a rich operating system (rich operating system, Rich OS), a trusted operating system (trusted operating system, Trusted OS)), and the like. The data storage area may store data (such as security configuration information and a TLP packet) created during use of the electronic device 100, and the like. In addition, the memory 102 may include a high-speed random access memory, and may further include a nonvolatile memory, for example, at least one magnetic disk storage device, a flash memory component, or a universal flash storage (universal flash storage, UFS). The processor 101 is connected to the memory 102 through the memory manager 103, and reads or writes data in the memory 102 through the memory manager 103.

In addition, the PCIe bus 105 of the electronic device 100 is configured to connect the endpoint device 106 to the memory 102. Specifically, the endpoint device 106 reads or writes data in the memory 102 through the system memory manager 104. A function of the system memory manager 104 is similar to that of the memory manager 103, and a difference lies only in that the memory manager 103 supports the processor 101 in reading or writing the data in the memory 102, and the system memory manager 104 supports the endpoint device 106 in reading or writing the data in the memory 102. FIG. 2 shows two PCIe topology trees of the PCIe bus 105. A PCIe topology tree of the PCIe bus 105 includes a PCIe root complex (root complex, RC) 1051-2 used as a root node, where the endpoint device (endpoint equipment, EP) is directly connected to the PCIe root complex as a leaf node. Another PCIe topology tree of the PCIe bus 105 includes a PCIe root complex 1051-1 used as a root node, and several PCIe switches 1052 used as child parent nodes. As shown in FIG. 2, two PCIe switches 1052-1 and 1052-2 are included. The PCIe root complex 1051-1 is used as a parent node of the PCIe switch 1052-1 and is connected to the PCIe switch 1052-1, and the PCIe switch 1052-1 is used as a parent node of the PCIe switch 1052-2 and is connected to the PCIe switch 1052-2. The PCIe root complex 1051-1 is used as a child parent node and is further connected to one endpoint device used as a leaf node, and the PCIe root complex 1051-2 is used as a child parent node and is further connected to two endpoint devices used as leaf nodes. The endpoint device may read or write the data in the memory 102 through the PCIe bus. In this way, data access between nodes connected through the PCIe bus is implemented. The foregoing is only an example. It should be noted that in the PCIe topology tree in another form, the root node and the child parent node may further have a device in another form. For example, the root node may be a root port on a PCIe root complex, and the child parent node may alternatively be an upstream port or a downstream port on a PCIe switch. It is clear that, in the following example, an example in which the PCIe root complex is used as the root node and the PCIe switch is used as the child parent node is mainly used for description. However, this does not constitute a limitation on the child parent node or the root node, which may be replaced with another type of device or apparatus, in some embodiments of this application.

The endpoint device 106 includes but is not limited to a graphics processing unit (graphics processing unit, GPU), an image signal processor (image signal processor, ISP), a network adapter, and the like.

Based on the foregoing electronic device, this embodiment of this application provides a data transmission method, applied to a root node or a child parent node in a PCIe topology tree corresponding to a PCIe bus. Refer to FIG. 3. The method includes the following steps.

S101: A PCIe security control apparatus receives a transmission packet sent by a sending device.

The sending device includes any one of the root node, the child parent node, or an endpoint device. The transmission packet is a TLP packet. There may be two transmission directions of the transmission packet in this embodiment of this application. One is that a destination address of the transmission packet is the endpoint device, that is, the transmission packet may be a TLP packet of a downstream data flow (downstream data flow); or a destination address of the transmission packet is a PCIe root complex, that is, the transmission packet may be a TLP packet of an upstream data flow (upstream data flow).

S102: When determining, based on pre-obtained security configuration information, that the transmission packet is valid, the PCIe security control apparatus transmits the transmission packet to a next device, where the transmission packet is the TLP packet.

The security configuration information includes configuration information in a function control register group (PCIPC capability control registers) of the PCIe protection control (PCIE protection control, PCIPC) apparatus implemented on the PCIe root complex (RC) and a PCIe switch (PCIe switch) and configuration information in a security table (security table, where implementation of the table is optional, and use of the table is also optional). In this case, the PCIe security control apparatus may implement step S102 through the configuration information. The configuration information in the function control register group includes information such as whether to enable a control function of the PCIe security control apparatus, indicating whether the PCIe security control apparatus supports the security table (which may include an upstream security table and a downstream security table based on the transmission direction of the transmission packet), a size of the supported security table, and whether the transmission packet needs to be controlled based on content of a security item in the security table (when the security table is used). In addition, the security item in the security table includes more refined configuration information, for example, information such as a granularity of security control, a security level of a corresponding security control address space domain, and whether to perform read/write check.

Specifically, the PCIe security control apparatus may be located at the root node (for example, the PCIe root complex) or at the child parent node (for example, the PCIe switch), and for TLP packets of upstream data flows of all subtrees or leaf nodes connected to the PCIe security control apparatus, may determine whether the TLP packet of the upstream data flow meets an expectation (consistent with a requirement of the security configuration information (including function control of the PCIe security control apparatus)), for example, whether a requester ID (requester ID) meets an expectation. Once it is found that the TLP packets of the upstream data flows of all the subtrees or leaf nodes do not meet the expectation, upstream transmission of the upstream data flows may be directly blocked. Alternatively, the PCIe security control apparatus determines whether TLP packets of downstream data flows transmitted by the root node or a specific child parent node to all subtrees or leaf nodes are as expected (based on the security configuration information of the PCIe security control apparatus), and if the TLP packets of the downstream data flows are not as expected, it needs to be ensured that the TLP packets of the downstream data flows are blocked from accessing the subtrees and leaf nodes.

In the data transmission method provided in this embodiment of this application, the PCIe security control apparatus mainly checks whether the transmitted TLP packet is valid by using preset security configuration information, where the security configuration information may be flexibly configured. Therefore, content of the TLP packet does not need to be changed. In comparison with a current technology, a prefix and an integrity check value do not need to be added to the TLP packet. Therefore, dependency on the prefix and the integrity check value is reduced, and a requirement for a PCIe device to support a calculation and check mechanism of the integrity check value is lowered. In addition, packet overheads of the PCIe bus are not increased, so that flexibility is higher. In addition, because the security configuration information may be flexibly configured, in comparison with setting a fixed prefix and a fixed integrity check value, a risk of a defective solution design of the prefix and the integrity check value being spoofed can be reduced.

Moreover, to ensure security of the obtained security configuration information, in this embodiment of this application, a security configuration interface may be provided for trusted system software, so that a security mechanism of each node in the entire PCIe topology tree can be configured more flexibly. Before step S101, the security of the security configuration information may be further ensured in the following manner. For example, the security configuration information may be configured and controlled by secure and trusted system software (trusted system software) on a processor CPU. In this way, when the security configuration information is a TLP packet for one or more specific leaf nodes in the PCIe topology tree, enclave protection for the one or more specific leaf nodes in the PCIe topology tree may be provided. Moreover, security configuration information on a child parent node far away from the PCIe root complex can be configured, only by using a configuration access request delivered through a trusted configuration channel, with a register group related to the security configuration information, or the security configuration information can be used for identifying which security configuration information is secure and trusted, and the register group related to the security configuration information can be configured only by the secure and trusted security configuration information. The detailed descriptions are as follows:

Manner 1: The PCIe security control apparatus obtains a configuration access request, and when determining that the configuration access request is from an operating system in a trusted execution environment TEE, obtains the security configuration information carried in the configuration access request.

First, security authentication is performed on each child parent node (for example, a PCIe switch (switch) device) in the PCIe topology tree by using trusted system software (for example, software running on the operating system in the TEE). After the authentication succeeds, the trusted system software (for example, an operating system (OS) kernel or system software running in the TEE) in the CPU may identify that a corresponding child parent node is trusted, and is also a device that supports the PCIe security control apparatus provided in this embodiment of this application. Then, the trusted system software in the CPU is configured, through a secure channel of a host CPU, in a register group (also referred to as the function control register group (PCIPC capability control register) of the PCIe security control (PCIPC) apparatus) and a security table (security table, where implementation and use of the security table are optional) in parent nodes and child parent nodes in the entire PCIe topology tree. Further, when the node in the PCIe topology tree receives a data flow, the foregoing step S101 and step S102 are performed on the data flow. For example, it is determined whether a data flow sent by each leaf node of the PCIe topology tree meets an expectation, and it is also controlled to determine whether the data flow that flows into each node of the PCIe topology tree meets the expectation, control (for example, block) inflow and outflow of a data flow that does not meet the expectation, and correspondingly process data flow access that is determined that does not meet the expectation. The trusted system software may control, by configuring the register group and the security table (where if the security table is implemented), whether a data flow of one or more specific leaf nodes needs PCIe security protection, so that enclave protection is provided for a specific leaf node.

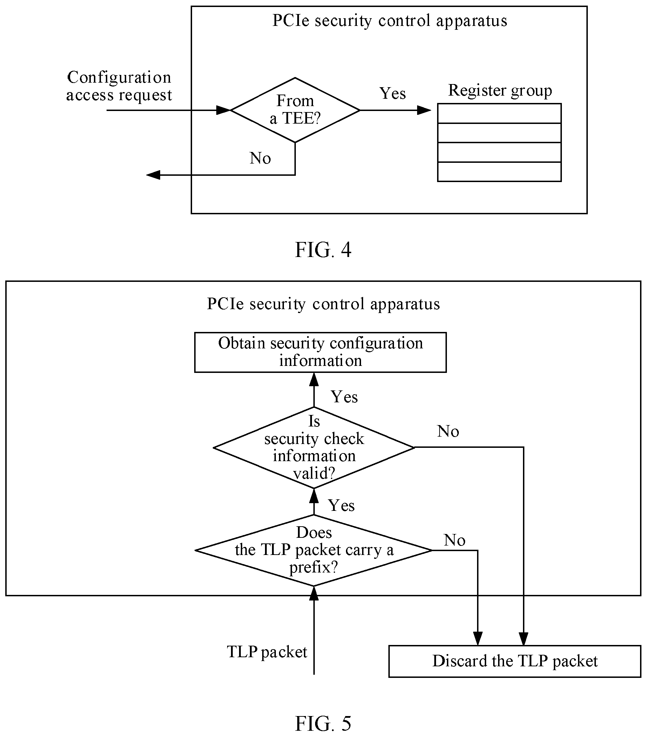

Refer to FIG. 4. The PCIe security control apparatus may include a group of register groups, where the register groups can provide a security configuration control interface for trusted system software. The PCIe security control apparatus determines security control of a corresponding data flow based on security configuration information stored in the register groups. Specifically, for a root node or a child parent node in the PCIe topology tree, the PCIe security control apparatus on the node needs to implement secure identification of a configuration access request of the register groups based on a system security architecture of a CPU, and the register groups can be configured only by a configuration access request from a secure world (secure world, for example, may be an operating system in a trusted execution environment TEE). The register groups can be configured only by the configuration access request from the secure world. A configuration access request from a normal world (normal world) is directly ignored. Whether the configuration access request is from the secure world is mainly determined based on implementation of the system security architecture in which the PCIe topology tree is located. For example, a PCIe security control apparatus on a PCIe RC may determine whether the configuration access request is from the secure world based on security identifier fields of an internal bus. However, a PCIe security control apparatus on each parent node and child parent node that is far away from the PCIe RC and that is in the PCIe topology tree may carry the security identifier fields in a host CPU through a vendor-defined local type1 prefix (vendor defined local prefix type1) of a PCIe TLP packet. The security identifier fields are implemented by hardware and cannot be forged or modified.

In addition, the PCIe security control apparatus on the root node or the child parent node may be configured to: determine, for data flows from all leaf nodes or child parent nodes under the root node or the child parent node, whether some or all data flows can access secure space (for example, memory space of the TEE) of system memory space (for example, the memory 102 in FIG. 2). Therefore, the root node or the child parent node may be configured and controlled to place one or more specific leaf nodes or child parent nodes under the root node or the child parent node in the secure space, to provide enclave security protection for the data flows of the nodes placed in the secure space, so that security of training data, communication data, and the like of the nodes is ensured. The trusted system software can view PCIe security control apparatuses on all parent nodes and child parent nodes in an entire PCIe topology, and the trusted system software can view a layout of the entire PCIe topology tree, and needs to control and maintain security configuration information of the PCIe security control apparatuses.

Manner 1 indicates that the security configuration information on the child parent node far away from the RC can be configured, by using the configuration access request delivered through the trusted configuration channel, with the function control register group and the security table related to the security configuration information (if implemented). The following manner 2 and manner 3 provide that the PCIe security control apparatus can actively identify which security configuration information is secure and trusted, and can only be configured, by using the secure and trusted security configuration information, with the function control register group and the security table related to the security configuration information. The trusted system software needs to configure the PCIe security control apparatus on parent nodes and leaf nodes in the entire PCIe topology tree through a packet that carries specific security check information. The register group related to the PCIe security control apparatus can be configured only by using the secure and trusted security configuration information carried in a TLP packet that is checked by the PCIe security control apparatus. Specifically, refer to FIG. 5. When receiving the TLP packet, the PCIe security control apparatus may determine whether the TLP packet carries a prefix, and check the security check information in the prefix. If a check result is valid, the PCIe security control apparatus obtains the security configuration information carried in the TLP packet; otherwise, the PCIe security control apparatus discards the TLP packet.

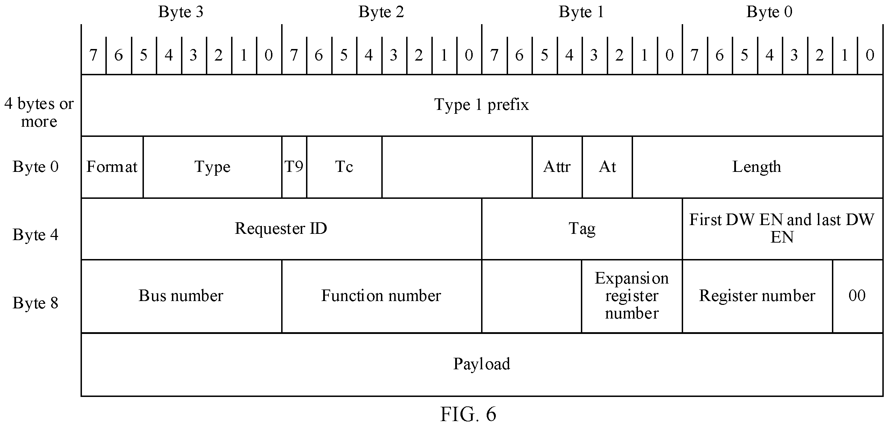

Manner 2: The security configuration information of the PCIe security control apparatus is implemented in configuration space of the root node or the child parent node. Specifically, the security configuration information is implemented in type 1 configuration space of a PCIe root port (PCIe root port) of a PCIe root complex or configuration space of an upstream port or a downstream port of a PCIe switch, or the security configuration information is configured through an indirect access programming interface provided by a register group implemented in the configuration space of a parent node or the child parent node. In this case, the security configuration information is configured by using a configuration packet. The corresponding configuration packet needs to include the security check information. The security configuration information configuration carried in the configuration packet is allowed to take effect only when the security check information is valid; otherwise, the configuration does not take effect. The trusted system software (for example, software running on the TEE) needs to determine, based on whether access is secure, whether to carry the security check information in the configuration packet. Specifically, a transaction type of the configuration packet may be the foregoing CfgWr TLP packet, and the security check information may be specifically carried in a type 1 prefix (vendor defined local TLP type1 prefix, VendPrefixL1 for short). As shown in FIG. 6, a packet format of the configuration packet is provided, and a type 1 prefix field of four or more bytes may be added to a packet header to carry the security check information.

Manner 3: The security configuration information of the PCIe security control apparatus is implemented in base address register space (BAR space) of the root node or the child parent node. Specifically, this is implemented in the base address register space (BAR space) of the PCIe root port of the PCIe root complex or the upstream port or the downstream port of the PCIe switch. In this case, the security configuration information of the PCIe security control apparatus needs to be configured by using a PCIe memory packet (Memory TLP, which may be specifically a PCIe memory write packet (PCIe Memory Write TLP, PCIe MemWr TLP)), where a prefix of the MemWr TLP packet needs to include security check information. When it is determined that the security check information is valid, the security configuration information carried in the MemWr TLP packet is obtained.

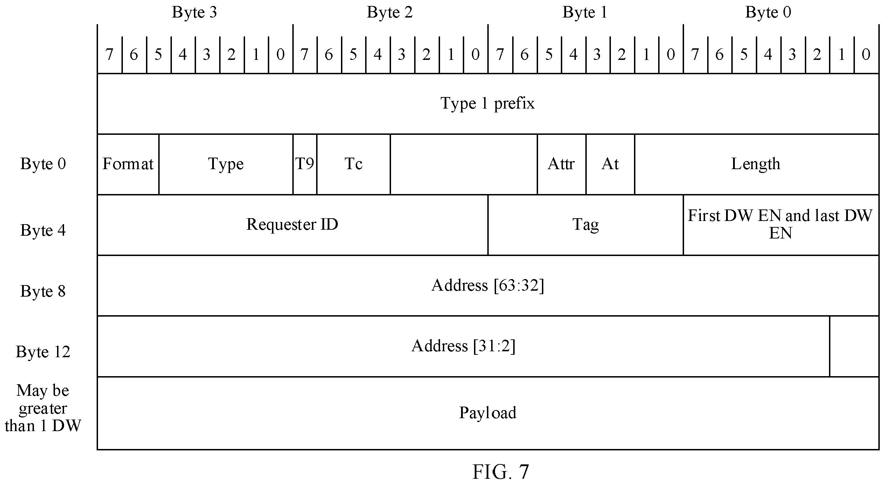

If the security configuration information is in the base address register (base address register, BAR) space, the CPU configures the security configuration information through the PCIe MemWr TLP of the vendor-defined type 1 prefix (VendPrefixL1) of a local TLP packet. In this case, the trusted system software (for example, the software running on the TEE) needs to determine, based on whether the access is secure, whether to carry the security check information in the memory packet. Specifically, the security check information may be specifically carried in the type 1 prefix of the memory packet. As shown in FIG. 7, a packet format of the memory packet is provided, and a type 1 prefix field of four or more bytes may be added to a packet header to carry the security check information.

Manner 2 and Manner 3 may alternatively be implemented in a mixed manner. For example, the function control register group may be implemented in Manner 2, the security table may be implemented in the BAR space, and a specific BAR and a corresponding offset may be indicated in a related register in the function control register group.

In addition, a specific implementation of step S102 is described as follows: The PCIe security control apparatus may identify, based on a physical root port (physical root port) on the PCIe root complex, whether a transmission packet in an incoming data flow is valid, or identify, based on a requester ID of the transmission packet of the incoming data flow from the root, whether the transmission packet in the data flow is valid.

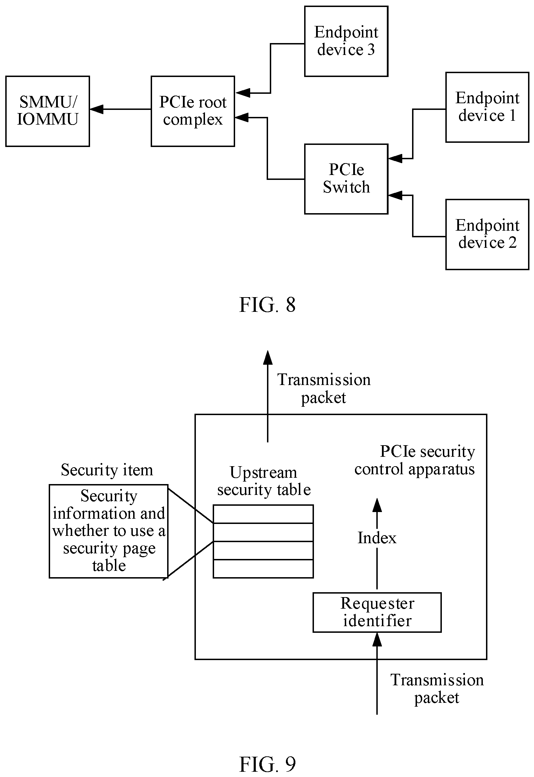

Specifically, with reference to FIG. 8, for an upstream data flow, an example in which a PCIe switch used as a child parent node receives a transmission packet sent by an endpoint device 1 is used. A destination address of the transmission packet is a PCIe root complex. After the PCIe switch receives the transmission packet, a PCIe security control apparatus on the PCIe switch determines, based on pre-obtained security configuration information, that the transmission packet is valid. The security configuration information includes one or more to-be-matched requester identifiers (requester IDs). Specifically, when determining that a first requester identifier in the transmission packet is one of the one or more to-be-matched requester identifiers, the PCIe security control apparatus determines that the transmission packet is valid. In addition, the PCIe security control apparatus may also determine, based on the security configuration information, whether to perform another security check, including but not limited to determining, based on configuration information of a function control register group, whether to search for the security table through indexing based on the requester identifier of the transmission packet, obtaining information of the security table to check whether a requester corresponding to the requester identifier has permission to access corresponding space, and what the specific permission is, and the like. It is clear that the PCIe switch is merely used as an example for description herein. On the PCIe root complex/root port, validity of the transmission packet may also be determined in the foregoing manner.

In another example, also with reference to FIG. 8, for the upstream data flow, an example in which a PCIe root complex (PCIe RC) used as a root node receives a transmission packet sent by an endpoint device 3 is used. A source address of the transmission packet is the endpoint device 3. After the PCIe RC receives the transmission packet, a PCIe security control apparatus on the PCIe RC determines, based on pre-obtained security configuration information, that the transmission packet is valid. The security configuration information includes one or more to-be-matched requester identifiers (requester IDs) and an upstream security table including one or more security items that are in a one-to-one correspondence with the one or more to-be-matched requester identifiers. In a security item table, the requester identifiers are used as indexes of all the security items. Specifically, the PCIe security control apparatus searches for a first security item through indexing based on the security configuration information and a first requester identifier in the transmission packet, checks the transmission packet based on content of the first security item, and determines that the transmission packet is valid after the check succeeds. It is clear that the PCIe RC is merely used as an example for description herein. On the PCIe switch, the validity of the transmission packet may also be determined in the foregoing manner. A difference lies in that the security configuration information configured in the PCIe switch may be different from that configured in the PCIe root complex. A reason for this is that different check control may be evenly allocated to different nodes in the PCIe topology tree, to ensure that workload of checking the transmission packet by each node is balanced. It is clear that the foregoing two types of check control may alternatively be simultaneously implemented on one node. Content of the security item in the upstream security table may include information such as security information and whether to use a security page table. The security information includes whether the transmission packet corresponding to the requester identifier (requester ID) is allowed to access secure space of a memory, whether a security attribute of the accessed memory space (for example, memory space in a secure world or memory space in a normal world) is determined by using a page table, or is directly controlled by a configuration of the security item, and the like. The security item may further store control information such as whether the transmission packet corresponding to the requester identifier (requester ID) needs a specific security page table and whether the page table needs to be queried.

In this way, with reference to FIG. 9, a PCIe security control apparatus searches for a corresponding security item of an upstream security table through indexing based on a requester identifier (requester ID), and determines, based on content of the security item, information such as whether a corresponding transmission packet needs to be securely accessed, whether a page table needs to be queried, and whether a security page table needs to be used. If the corresponding security item cannot be found in the upstream security table, the corresponding transmission packet can only access memory space of a normal world, and access permission is determined by using a page table of an IOMMU or SMMU. For a data flow of the requester ID, check control of the PCIe security control apparatus is disabled. In addition, for a data flow (upstream data flow (upstream)) from a leaf node, the PCIe security control apparatus determines, based on security configuration information, whether to check the data flow. The check content may include, for example, whether the requester ID is valid, whether secure access is required, and the like. If the check is required, the check is performed based on the security configuration information (for example, the foregoing to-be-matched requester identifier (requester ID) and security item). The upstream data flow can continue to access only after the check succeeds; otherwise, the upstream data flow is directly prevented from continuing to access. After the upstream data flow is successfully checked, a parent node and a child parent node further need to determine, based on a configuration, whether to determine a security attribute of memory space accessed by the upstream data flow. On a root node, a security tag of the upstream data flow may be implemented based on the CPU security technology, to implement access to secure space of a system memory.

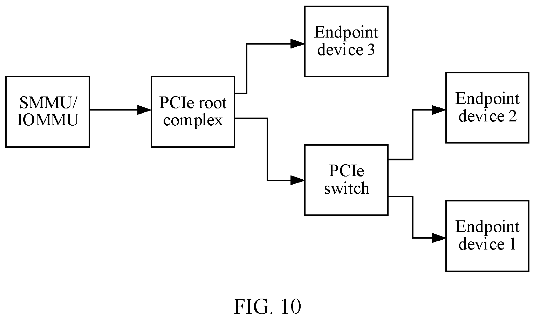

Specifically, with reference to FIG. 10, for a downstream data flow, an example in which a PCIe switch used as a child parent node receives a transmission packet sent by a PCIe root complex (PCIe RC) to an endpoint device 1 is used. A destination address of the transmission packet is the endpoint device 1. After the PCIe switch receives the transmission packet, a PCIe security control apparatus on the PCIe switch determines, based on pre-obtained security configuration information, that the transmission packet is valid. The security configuration information includes one or more to-be-matched root port (root port) numbers. Specifically, when determining that a first root port number in the transmission packet is one of the one or more to-be-matched root port numbers, the PCIe security control apparatus determines that the transmission packet is valid. It is clear that the PCIe switch is merely used as an example for description herein. On the PCIe root complex, validity of the transmission packet may also be determined in the foregoing manner.

In another example, also with reference to FIG. 10, for the downstream data flow, an example in which the PCIe RC used as the root node receives a transmission packet sent by a local CPU or another engine of this system to an endpoint device 3 is used. A destination address of the transmission packet is the endpoint device 3. After the PCIe RC receives the transmission packet, a PCIe security control apparatus on the PCIe RC determines, based on the pre-obtained security configuration information, whether to perform security check on a downstream packet. If the security check is required, the following describes how the PCIe security control apparatus determines that the transmission packet is valid. The security configuration information includes one or more to-be-matched root port (root port) numbers and a downstream security table including one or more security items that are in a one-to-one correspondence with the one or more to-be-matched root port numbers. In a security item table, the root port numbers are used as indexes of all the security items. Specifically, the PCIe security control apparatus searches for a second security item through indexing based on the security configuration information and a first root port number in the transmission packet, checks the transmission packet based on content of the second security item, and determines that the transmission packet is valid after the check succeeds. The PCIe security control apparatus on a child parent node at the last level may alternatively determine the validity of the transmission packet only by using the root port (root port) number, and does not use the downstream security table; or may search for the security item through indexing in the downstream security table by using any one of a bus number, a device number, or a function number of a leaf node (the endpoint device). It is clear that the PCIe root complex is merely used as an example for description herein. On the PCIe switch, the validity of the transmission packet may also be determined in the foregoing manner. A difference lies in that the security configuration information configured in the PCIe switch is different from that configured in the PCIe root complex. A reason for this is that different check control may be evenly allocated to different nodes in different PCIe topology trees, to ensure that workload of checking the transmission packet by each node is balanced. It is clear that the foregoing two types of check control may alternatively be simultaneously implemented on one node.

Content of the security item in the downstream security table includes a security signature corresponding to the root port (root port) number, and may further include content such as a security level. For a data flow output from the PCIe root complex, a corresponding security item of the downstream security table is searched for through indexing based on an output root port number, to determine, based on the content of the corresponding security item, whether to mark the security signature for the transmission packet. The security signature of the transmission packet may be placed in a vendor-defined type 1 prefix. The PCIe security control apparatuses corresponding to all child parent nodes in the topology tree need to identify the type 1 prefix of the transmission packet sent by the PCIe root complex, and parse the type 1 prefix according to provisions of the present invention.

Specifically, the security configuration information of the PCIe security control apparatus on the PCIe root complex determines whether an endpoint device corresponding to downstream access needs to be securely accessed, and if the endpoint device does not need to be securely accessed, sends the transmission packet normally. If the endpoint device needs to be securely accessed, in this case, the PCIe security control apparatus on the PCIe root complex needs to add the type 1 prefix to the transmission packet, and content of the type 1 prefix needs to include a minimum PCIe bus number occupied by the endpoint device of the transmission packet and the security signature.

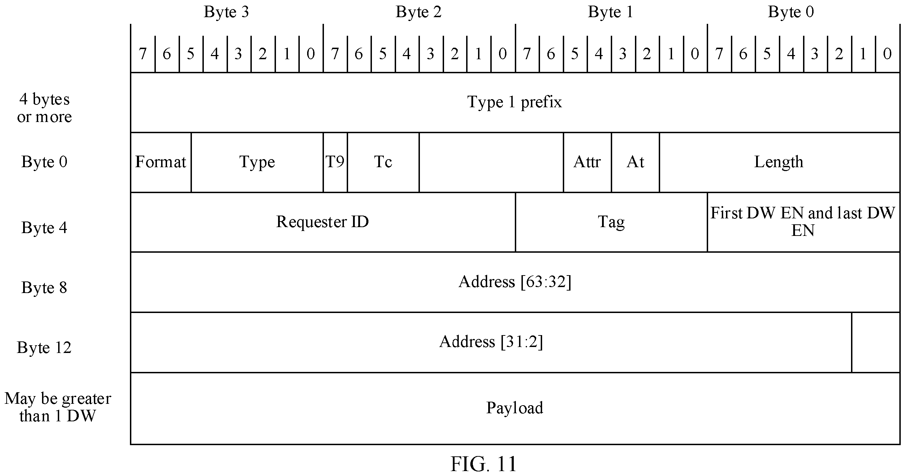

All root nodes (PCIe root complexes) and child parent nodes (PCIe switches) that include the PCIe security control apparatus need to identify the content of the type 1 prefix of the transmission packet, and only type 1 prefixes whose bus numbers (minimum PCIe bus numbers) in the type 1 prefixes are equal to secondary bus numbers (secondary bus number) of the type 1 prefixes need to be processed, and type 1 prefixes whose bus numbers are not equal to the secondary bus numbers of the type 1 prefixes are directly forwarded without processing. As shown in FIG. 11, a packet format of the transmission packet is provided. A type 1 prefix field of four or more bytes may be added to a packet header to carry the minimum PCIe bus number and the security signature.

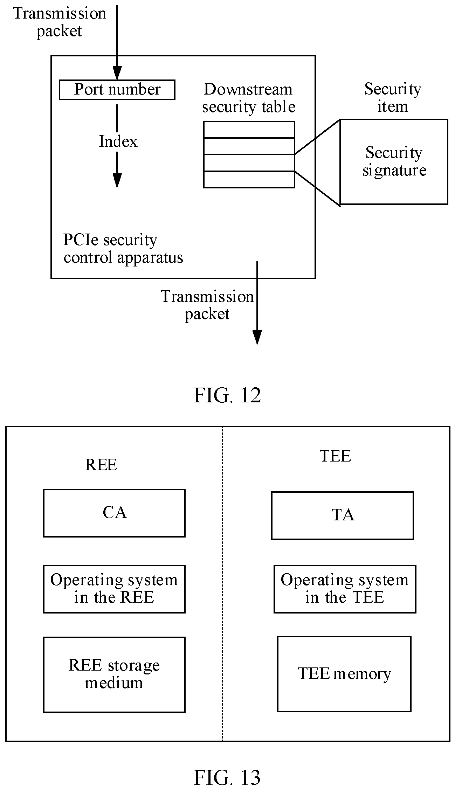

With reference to FIG. 12, when a PCIe security control apparatus of a root node (a PCIe root complex) and a child parent node (a PCIe switch) process a transmission packet whose bus number in a type 1 prefix is equal to a secondary bus number of the type 1 prefix, the PCIe security control apparatus needs to check a security signature of the transmission packet based on a security item (if the security item exists) in a downstream security table that is found through indexing by using a root port number of the transmission packet. The PCIe security control apparatus determines, based on a check result, whether the transmission packet is secure and reliable. Only when determining that the transmission packet is secure and reliable, the PCIe security control apparatus can continue to forward the transmission packet to a corresponding leaf node; otherwise, for a transmission packet of write access, the PCIe security control apparatus directly discards the transmission packet; and for a transmission packet of read access, the PCIe security control apparatus discards the transmission packet, and returns a completion packet in an unsupported state or a completion packet with all 0s or all 1s in a normal state. If no security item is found through indexing, the transmission packet is directly forwarded to the corresponding leaf node.

In addition, it should be noted that, when the PCIe security control apparatus of a parent node or child parent node of any level in a PCIe topology tree parses and processes a type 1 prefix whose bus number in the type 1 prefix is equal to a secondary bus number, the type 1 prefix may be removed from a transmission packet, and the type 1 prefix is no longer carried to continue to be forwarded; or the prefix may not be removed, and the prefix may be carried to continue to be forwarded. Because this is a type 1 prefix, the leaf node may be directly ignored. In addition, in the entire PCIe topology tree, parsing and processing only needs to be completed on one node so that the bus number in the type 1 prefix is equal to the secondary bus number, and the parsing and processing do not need to be performed on all nodes. In this way, a resource waste can also be reduced.

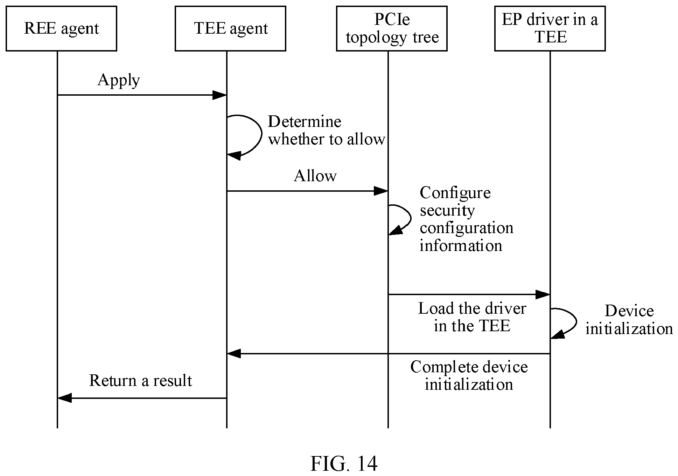

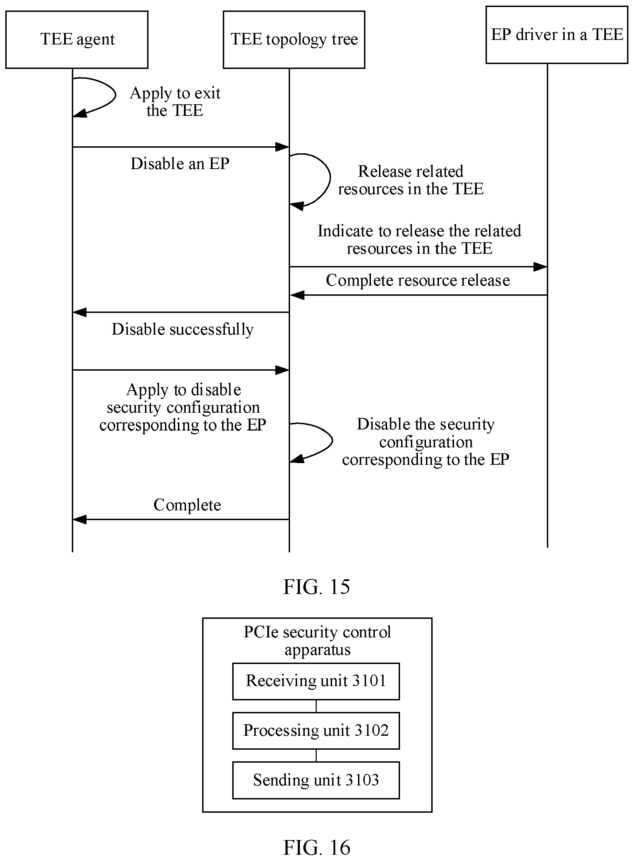

In addition, it should be noted that, the foregoing data transmission method may be implemented based on a CPU security technology architecture, and can provide a software programming interface for trusted system software, to provide more flexible selection and extension for a security solution of an entire computing system, and can provide personalized and user-based selection for a security solution of a large-scale commercial computing system. Therefore, a secure computing environment can be provided for a single user or a part of users, a specific user can complete a computing task in a secure environment, and for users with low security requirements or low priorities, a common computing environment is provided to implement low-cost computing. As shown in FIG. 13, a schematic diagram of a structure of a computing system is shown. A computing device is built on a rich execution environment (rich execution environment, REE) and a trusted execution environment (trusted execution environment, TEE). The REE is also referred to as a general operating environment, and mainly includes a rich operating system (rich operating system, Rich OS), or referred to as an operating system in the REE, running on a general-purpose processor, and a client application (client application, CA) running on the operating system in the REE. However, an open environment provides a channel for information leakage and malware spreading, and therefore a terminal device is exposed to increasing attacks in various forms, and a security problem of the terminal device becomes increasingly prominent. The TEE is an independent running environment running outside the REE, and mainly includes a trusted operating system (trusted operating system, Trusted OS), or referred to as an operating system in the TEE, and one or more trusted applications (trusted applications, TAs) running on the operating system in the TEE, where the TEE is isolated from the REE. In a possible implementation, a monitoring system (monitor system) may complete switching of a processor between the REE operating system and the TEE operating system. When a process of the REE runs on the processor, a process of the TEE is suspended. When a process of the TEE runs on the processor, a process of the REE is suspended. Each TA running on the operating system in the TEE is independent, and the TA cannot access a security resource of another TA without authorization. The REE cannot directly access hardware and software resources of the TEE, and the REE and the TEE can interact only through an authorized application programming interface (application programming interface, API). For brief description, interaction between the process (for example, a process of the TA or a process of the TEE operating system) in the TEE and the process (for example, a process of the CA or a process of the REE operating system) in the REE described in this application is not emphasized as being implemented through the API. Therefore, the TEE can defend against software attacks on the REE side. For example, some storage media (referred to as TEE storage media or trusted memory space) of the device are configured as security attributes, and can be accessed only by the TEE. The TEE storage medium includes a TEE memory, and the TEE memory includes a memory (TA memory) allocated to the TA and a memory of the operating system in the TEE. It should be noted that the TEE storage medium and an REE storage medium may be physically separated, or may be integrated together. To ensure security of the foregoing data transmission method, as shown in FIG. 14, an REE agent (agent) (which may be the CA and/or the Rich OS in the REE) of an endpoint device EP directly applies to a TEE agent (agent) (which may be the TA and/or the Trusted OS in the TEE), and requires to enter the TEE to execute a computing task of the REE agent. The TEE agent (TEE Agent) determines whether to allow the application based on a current system resource. If the application is allowed, the TEE agent (TEE Agent) enables, based on a PCIe topology tree in which the applicant is located and a layout of PCIe security control apparatuses in the entire PCIe topology tree, all configurations related to the PCIe security control apparatuses in the entire path from a root to a leaf node in which the endpoint device EP is located, and configures related security configuration information (configuration information of PCIPC Capability Control Registers and configuration information of a security table). Specifically, the PCIe topology tree in which the EP device is located and that is related to the TEE agent and the REE agent is the same tree, and then the TEE agent may configure security configuration information of all key nodes on the path based on the tree. Then, a result is returned to the REE agent of the endpoint device EP, to notify the REE agent that the EP can be switched to the TEE for running. A corresponding EP driver is loaded in the TEE, and the EP driver in the TEE completes all initialization of the corresponding endpoint device. In this case, a security computing environment may be applied for in the TEE through a user programming interface of the TEE agent, and specific security configuration information may be adjusted based on an interface parameter of the user programming interface, so that the TEE agent may adjust related configuration of the PCIe security control apparatuses on the entire path from a PCIe root complex to the corresponding EP. Then, the EP driver in the TEE notifies the REE agent that the device initialization is completed, so that the TEE agent reports the returned result to the REE agent. In addition, as shown in FIG. 15, the endpoint device EP may actively exit the TEE by the TEE agent, and resume running in the REE. After obtaining an application for exiting the TEE (which may be sent by the REE agent, or actively proposed by the endpoint device EP in the TEE agent), the TEE agent actively applies to a TEE topology tree for disabling the EP. The TEE topology tree releases related resources on parent nodes and child parent nodes on all paths in the tree from a root to the endpoint device EP, and notifies the EP driver in the TEE to release the related resources in the TEE. The EP driver in the TEE sends information indicating that resource release is completed to the TEE topology tree, and the TEE topology tree replies information indicating that the resources are successfully disabled to the TEE agent. Then, the TEE agent applies to the TEE topology tree for disabling security configuration corresponding to the EP, and the PCIe security control apparatuses on the parent nodes and child parent nodes on all the paths in the tree from the root to the endpoint device EP in the TEE topology tree disable the related security configuration for the endpoint device EP. Then, the TEE topology tree replies exit success information to the TEE agent.

It may be understood that the security solutions related to the cooperation software shown in FIG. 14 or FIG. 15 may be more flexible and diversified. This embodiment of this application is not limited to implementations of the security software system solution shown in FIG. 14 or FIG. 15. Because this embodiment of this application provides a flexible trusted programming interface, trusted software solutions at an upper layer may be flexible and diversified.

It may be understood that, in the foregoing data transmission method embodiments, methods and/or steps implemented by the PCIe security control apparatus may alternatively be implemented by a component (for example, a chip or a circuit) that can be used in the PCIe security control apparatus.

It may be understood that, to implement the foregoing functions, the PCIe security control apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by the hardware or the hardware driven by the computer software depends on particular applications and design constraint conditions of the technical solutions. A person skilled in the art may use different methods to implement the described functions for each particular application, but it should not be considered that the implementation goes beyond the scope of this application.

In embodiments of this application, the PCIe security control apparatus may be divided into function modules based on the foregoing method embodiments. For example, each function module may be obtained through division based on a corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

FIG. 16 is a schematic diagram of a structure of a PCIe security control apparatus. The PCIe security control apparatus is applied to a root node or a child parent node in a PCIe topology tree corresponding to a PCIe bus, and includes a receiving unit 3101, a processing unit 3102, and a sending unit 3103.

All related content of the steps in the foregoing method embodiments may be cited in function descriptions of corresponding function modules.

In this embodiment, the PCIe security control apparatus is presented in a form of division into function modules or units in an integrated manner. The "module" or "unit" herein may be an ASIC, a circuit, a processor and a memory that execute one or more software or firmware programs, an integrated logic circuit, and/or another component that can provide the foregoing functions.

Specifically, the receiving unit 3101 is configured to receive a transmission packet sent by a sending device, where the sending device includes any one of the root node, the child parent node, or an endpoint device, the endpoint device is connected to the root node or the child parent node, and a memory manager is connected to the root node.

The processing unit 3102 is configured to: when determining, based on pre-obtained security configuration information, that the transmission packet is valid, transmit the transmission packet to a next device through the sending unit 3103, where the transmission packet is a TLP packet.

Optionally, the processing unit 3102 is further configured to: obtain a configuration access request, and when determining that the configuration access request is from an operating system in a trusted execution environment TEE, obtain the security configuration information carried in the configuration access request.

Optionally, the processing unit 3102 is further configured to: obtain a configuration packet in configuration space of the root node or the child parent node, where the configuration packet includes security check information, and when determining that the security check information is valid, obtain the security configuration information carried in the configuration packet, where the configuration packet is a TLP packet.

Optionally, the processing unit 3102 is further configured to: obtain a memory packet generated by a CPU, where the memory packet includes a memory packet that carries security check information, and when determining that the security check information is valid, obtain the security configuration information carried in the memory packet, where the memory packet is a TLP packet.

Optionally, a destination address of the transmission packet is the root node, the security configuration information includes one or more to-be-matched requester identifiers, and the processing unit 3102 is specifically configured to: when determining that a first requester identifier in the transmission packet is one of the one or more to-be-matched requester identifiers, determine that the transmission packet is valid.

Optionally, a destination address of the transmission packet is the root node, the security configuration information includes one or more to-be-matched requester identifiers and one or more security items that are in a one-to-one correspondence with the one or more to-be-matched requester identifiers, and the processing unit 3102 is specifically configured to: search for a first security item through indexing based on the security configuration information and a first requester identifier in the transmission packet, check the transmission packet based on content of the first security item, and determine that the transmission packet is valid after the check succeeds.

Optionally, a destination address of the transmission packet is the endpoint device, the security configuration information includes one or more to-be-matched root port numbers, and the processing unit 3102 is specifically configured to: when determining that a first root port number in the transmission packet is one of the one or more to-be-matched root port numbers, determine that the transmission packet is valid.

Optionally, a destination address of the transmission packet is the endpoint device, the security configuration information includes one or more to-be-matched root port numbers and one or more security items that are in a one-to-one correspondence with the one or more to-be-matched root port numbers, and the processing unit 3102 is specifically configured to: search for a second security item through indexing based on the security configuration information and a first root port number in the transmission packet, check the transmission packet based on content of the second security item, and determine that the transmission packet is valid after the check succeeds.

Optionally, the transmission packet includes a security signature configured by the root node based on the security configuration information, and the processing unit 3102 is specifically configured to check the security signature of the transmission packet based on the content of the second security item.

All related content of the steps in the foregoing method embodiments may be cited in function descriptions of the corresponding function modules. Details are not described herein again.

Optionally, this embodiment of this application further provides a PCIe security control apparatus (where for example, the PCIe security control apparatus may be a chip or a chip system). The PCIe security control apparatus includes a processor configured to implement the method in any one of the foregoing method embodiments. In a possible design, the PCIe security control apparatus further includes a memory. The memory is configured to store necessary program instructions and data, and the processor may invoke program code stored in the memory to indicate the PCIe security control apparatus to perform the method in any one of the foregoing method embodiments. It is clear that the memory may not be in the PCIe security control apparatus. When the PCIe security control apparatus is a chip system, the PCIe security control apparatus may include a chip, or may include a chip and another discrete component. This is not specifically limited in this embodiment of this application.

An embodiment of this application further provides a computer-readable storage medium. The computer-readable storage medium stores instructions, and when the instructions are run on a computer, the computer is enabled to perform the method corresponding to the foregoing method embodiments.

An embodiment of this application further provides a computer program product including instructions. When the instructions are run on the computer, the computer is enabled to perform the method corresponding to the foregoing method embodiments.

For technical effects of the electronic device, the computer-readable storage medium, and the computer program product in embodiments of this application, refer to the foregoing technical effects of the data transmission method. Details are not described herein again.

It should be understood that sequence numbers of the foregoing processes do not mean execution sequences in various embodiments of this application. The execution sequences of the processes should be determined based on functions and internal logic of the processes, and should not be construed as any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for a purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the unit is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, applied to a root node or a child parent node in a peripheral component interconnect express, PCIe, topology tree corresponding to a PCIe bus, wherein the method comprises:
receiving (S101) a transmission packet sent by a sending device, wherein the sending device comprises any one of the root node, the child parent node, or an endpoint device, the endpoint device is connected to the root node or the child parent node, and the root node is connected to a system memory manager; and
when determining, based on pre-obtained security configuration information, that the transmission packet is valid, transmitting (S102) the transmission packet to a next device, wherein the transmission packet is a transaction layer packet, TLP, packet;
wherein before the determining, based on pre-obtained security configuration information, that the transmission packet is valid, the method further comprises:
obtaining a configuration access request, and when determining that the configuration access request is from an operating system in a trusted execution environment, TEE, obtaining the security configuration information carried in the configuration access request, wherein the configuration access request is a TLP packet; or
obtaining a configuration packet in configuration space of the root node or the child parent node, wherein the configuration packet comprises security check information, and when determining that the security check information is valid, obtaining the security configuration information carried in the configuration packet, wherein the configuration packet is a TLP packet; or
obtaining a memory packet generated by a processor CPU, wherein the memory packet comprises a memory packet that carries security check information, and when determining that the security check information is valid, obtaining the security configuration information carried in the memory packet, wherein the memory packet is a TLP packet.

2. The method according to claim 1, wherein a destination address of the transmission packet is the root node, and the security configuration information comprises one or more to-be-matched requester identifiers; and
the determining, based on pre-obtained security configuration information, that the transmission packet is valid comprises: when determining that a first requester identifier in the transmission packet is one of the one or more to-be-matched requester identifiers, determining that the transmission packet is valid.

3. The method according to claim 1, wherein a destination address of the transmission packet is the root node, and the security configuration information comprises one or more to-be-matched requester identifiers and one or more security items that are in a one-to-one correspondence with the one or more to-be-matched requester identifiers; and
the determining, based on pre-obtained security configuration information, that the transmission packet is valid comprises:
searching for a first security item through indexing based on the security configuration information and a first requester identifier in the transmission packet, checking the transmission packet based on content of the first security item, and determining that the transmission packet is valid after the check succeeds.

4. The method according to claim 1, wherein a destination address of the transmission packet is the endpoint device, and the security configuration information comprises one or more to-be-matched root port numbers; and
the determining, based on pre-obtained security configuration information, that the transmission packet is valid comprises: when determining that a first root port number in the transmission packet is one of the one or more to-be-matched root port numbers, determining that the transmission packet is valid.

5. A peripheral component interconnect express, PCIe, security control apparatus, applied to a root node or a child parent node in a PCIe topology tree corresponding to a PCIe bus, wherein the apparatus comprises:
a receiving unit (3101), configured to receive a transmission packet sent by a sending device, wherein the sending device comprises any one of the root node, the child parent node, or an endpoint device, the endpoint device is connected to the root node or the child parent node, and the root node is connected to a system memory manager; and
a processing unit (3102), configured to: when determining, based on pre-obtained security configuration information, that the transmission packet is valid, transmit the transmission packet to a next device through a sending unit, wherein the transmission packet is a transaction layer packet, TLP, packet;
before the determining, based on pre-obtained security configuration information, that the transmission packet is valid, the processing unit is further configured to: obtain a configuration access request, and when determining that the configuration access request is from an operating system in a trusted execution environment, TEE, obtain the security configuration information carried in the configuration access request, wherein the configuration access request is a TLP packet; or
obtain a configuration packet in configuration space of the root node or the child parent node, wherein the configuration packet comprises security check information, and when determining that the security check information is valid, obtain the security configuration information carried in the configuration packet, wherein the configuration packet is a TLP packet; or
obtain a memory packet generated by a CPU, wherein the memory packet comprises a memory packet that carries security check information, and when determining that the security check information is valid, obtain the security configuration information carried in the memory packet, wherein the memory packet is a TLP packet.

6. The PCIe security control apparatus according to claim 4, wherein a destination address of the transmission packet is the root node, and the security configuration information comprises one or more to-be-matched requester identifiers; and
the processing unit is specifically configured to: when determining that a first requester identifier in the transmission packet is one of the one or more to-be-matched requester identifiers, determine that the transmission packet is valid.

7. The PCIe security control apparatus according to claim 5, wherein a destination address of the transmission packet is the root node, and the security configuration information comprises one or more to-be-matched requester identifiers and one or more security items that are in a one-to-one correspondence with the one or more to-be-matched requester identifiers; and
the processing unit is specifically configured to: search for a first security item through indexing based on the security configuration information and a first requester identifier in the transmission packet, check the transmission packet based on content of the first security item, and determine that the transmission packet is valid after the check succeeds.

8. A PCIe bus, wherein the PCIe security control apparatus according to any one of claims 5 to 7 is applied to a root node or a child parent node in a PCIe topology tree corresponding to the PCIe bus.

9. An electronic device, comprising the PCIe bus according to claim 8, wherein an endpoint device is connected to a memory of the electronic device through the PCIe bus.

## Patentansprüche

1. Datenübertragungsverfahren, das auf einen Stammknoten oder einen Kind-Elternknoten in einem Peripheral-Component-Interconnect-Express-Topologiebaum, PCIe-Topologiebaum, der einem PCIe-Bus entspricht, angewandt wird, wobei das Verfahren Folgendes umfasst:
Empfangen (S101) eines Übertragungspakets, das durch ein Sendegerät gesendet wird, wobei das Sendegerät eines des Stammknotens, des Kind-Elternknotens oder eines Endpunktgeräts umfasst, das Endpunktgerät mit dem Stammknoten oder dem Kind-Elternknoten verbunden ist und der Stammknoten mit einem Systemspeicherverwalter verbunden ist; und
bei Bestimmen, basierend auf vorab erlangten Sicherheitskonfigurationsinformationen, dass das Übertragungspaket gültig ist, Übertragen (S102) des Übertragungspakets an ein nächstes Gerät, wobei das Übertragungspaket ein Transaktionsschichtpaket, TLP-Paket, ist;
wobei das Verfahren vor dem Bestimmen, basierend auf vorab erlangten Sicherheitskonfigurationsinformationen, dass das Übertragungspaket gültig ist, ferner Folgendes umfasst:
Erlangen einer Konfigurationszugriffsanforderung und bei Bestimmen, dass die Konfigurationszugriffsanforderung von einem Betriebssystem in einer vertrauenswürdigen Ausführungsumgebung, TEE, stammt,
Erlangen der Sicherheitskonfigurationsinformationen, die in der Konfigurationszugriffsanforderung enthalten sind, wobei die Konfigurationszugriffsanforderung ein TLP-Paket ist; oder
Erlangen eines Konfigurationspakets in einem Konfigurationsraum des Stammknotens oder des Kind-Elternknotens, wobei das Konfigurationspaket Sicherheitsprüfinformationen umfasst, und bei Bestimmen, dass die Sicherheitsprüfinformationen gültig sind, Erlangen der Sicherheitskonfigurationsinformationen, die in dem Konfigurationspaket enthalten sind, wobei das Konfigurationspaket ein TLP-Paket ist; oder
Erlangen eines Speicherpakets, das durch eine Prozessor-CPU erzeugt wird, wobei das Speicherpaket ein Speicherpaket umfasst, das Sicherheitsprüfinformationen enthält, und beim Bestimmen, dass die Sicherheitsprüfinformationen gültig sind, Erlangen der Sicherheitskonfigurationsinformationen, die in dem Speicherpaket enthalten sind, wobei das Speicherpaket ein TLP-Paket ist.

2. Verfahren nach Anspruch 1, wobei eine Zieladresse des Übertragungspakets der Stammknoten ist und die Sicherheitskonfigurationsinformationen eine oder mehrere zusammenzupassende Anfordererkennungen umfassen; und
das Bestimmen, basierend auf vorab erlangten Sicherheitskonfigurationsinformationen, dass das Übertragungspaket gültig ist, Folgendes umfasst: bei Bestimmen, dass eine erste Anfordererkennung in dem Übertragungspaket eine der einen oder der mehreren zusammenzupassenden Anfordererkennungen ist, Bestimmen, dass das Übertragungspaket gültig ist.

3. Verfahren nach Anspruch 1, wobei eine Zieladresse des Übertragungspakets der Stammknoten ist und die Sicherheitskonfigurationsinformationen eine oder mehrere zusammenzupassende Anfordererkennungen und ein oder mehrere Sicherheitselemente umfassen, die in einer Eins-zu-eins-Korrespondenz mit der einen oder den mehreren zusammenzupassenden Anfordererkennungen stehen; und
das Bestimmen, basierend auf vorab erlangten Sicherheitskonfigurationsinformationen, dass das Übertragungspaket gültig ist, Folgendes umfasst:
Suchen nach einem ersten Sicherheitselement über Indexierung basierend auf den Sicherheitskonfigurationsinformationen und einer ersten Anfordererkennung in dem Übertragungspaket, Prüfen des Übertragungspakets basierend auf einem Inhalt des ersten Sicherheitselements und Bestimmen, dass das Übertragungspaket gültig ist, nachdem die Prüfung gelingt.

4. Verfahren nach Anspruch 1, wobei eine Zieladresse des Übertragungspakets das Endpunktgerät ist und die Sicherheitskonfigurationsinformationen eine oder mehrere zusammenzupassende Stammportnummern umfassen; und
das Bestimmen, basierend auf vorab erlangten Sicherheitskonfigurationsinformationen, dass das Übertragungspaket gültig ist, Folgendes umfasst: bei Bestimmen, dass eine erste Stammportnummer in dem Übertragungspaket eine der einen oder der mehreren zusammenzupassenden Stammportnummern ist, Bestimmen, dass das Übertragungspaket gültig ist.

5. Peripheral-Component-Interconnect-Express-Sicherheitssteuerungsvorrichtung, PCIe-Sicherheitssteuerungsvorrichtung, die auf einen Stammknoten oder einen Kind-Elternknoten in einem PCIe-Topologiebaum, der einem PCIe-Bus entspricht, angewandt wird, wobei die Vorrichtung Folgendes umfasst:
eine Empfangseinheit (3101), die dazu konfiguriert ist, ein Übertragungspaket, das durch ein Sendegerät gesendet wird, zu empfangen, wobei das Sendegerät eines des Stammknotens, des Kind-Elternknotens oder eines Endpunktgeräts umfasst, das Endpunktgerät mit dem Stammknoten oder dem Kind-Elternknoten verbunden ist und der Stammknoten mit einem Systemspeicherverwalter verbunden ist; und
eine Verarbeitungseinheit (3102), die zu Folgendem konfiguriert ist: bei Bestimmen, basierend auf vorab erlangten Sicherheitskonfigurationsinformationen, dass das Übertragungspaket gültig ist, Übertragen des Übertragungspakets an ein nächstes Gerät über eine Sendeeinheit, wobei das Übertragungspaket ein Transaktionsschichtpaket, TLP-Paket, ist;
wobei die Verarbeitungseinheit vor dem Bestimmen, basierend auf vorab erlangten Sicherheitskonfigurationsinformationen, dass das Übertragungspaket gültig ist, ferner zu Folgendem konfiguriert ist: Erlangen einer Konfigurationszugriffsanforderung und bei Bestimmen, dass die Konfigurationszugriffsanforderung von einem Betriebssystem in einer vertrauenswürdigen Ausführungsumgebung, TEE, stammt,
Erlangen der Sicherheitskonfigurationsinformationen, die in der Konfigurationszugriffsanforderung enthalten sind, wobei die Konfigurationszugriffsanforderung ein TLP-Paket ist; oder
Erlangen eines Konfigurationspakets in einem Konfigurationsraum des Stammknotens oder des Kind-Elternknotens, wobei das Konfigurationspaket Sicherheitsprüfinformationen umfasst, und bei Bestimmen, dass die Sicherheitsprüfinformationen gültig sind, Erlangen der Sicherheitskonfigurationsinformationen, die in dem Konfigurationspaket enthalten sind, wobei das Konfigurationspaket ein TLP-Paket ist; oder
Erlangen eines Speicherpakets, das durch eine CPU erzeugt wird, wobei das Speicherpaket ein Speicherpaket umfasst, das Sicherheitsprüfinformationen enthält, und beim Bestimmen, dass die Sicherheitsprüfinformationen gültig sind, Erlangen der Sicherheitskonfigurationsinformationen, die in dem Speicherpaket enthalten sind, wobei das Speicherpaket ein TLP-Paket ist.

6. PCIe-Sicherheitssteuerungsvorrichtung nach Anspruch 4, wobei eine Zieladresse des Übertragungspakets der Stammknoten ist und die Sicherheitskonfigurationsinformationen eine oder mehrere zusammenzupassende Anfordererkennungen umfassen; und
die Verarbeitungseinheit speziell zu Folgendem konfiguriert ist:
bei Bestimmen, dass eine erste Anfordererkennung in dem Übertragungspaket eine der einen oder der mehreren zusammenzupassenden Anfordererkennungen ist, Bestimmen, dass das Übertragungspaket gültig ist.

7. PCIe-Sicherheitssteuerungsvorrichtung nach Anspruch 5, wobei eine Zieladresse des Übertragungspakets der Stammknoten ist und die Sicherheitskonfigurationsinformationen eine oder mehrere zusammenzupassende Anfordererkennungen und ein oder mehrere Sicherheitselemente umfassen, die in einer Eins-zu-eins-Korrespondenz mit der einen oder den mehreren zusammenzupassenden Anfordererkennungen stehen; und
die Verarbeitungseinheit speziell zu Folgendem konfiguriert ist: Suchen nach einem ersten Sicherheitselement über Indexierung basierend auf den Sicherheitskonfigurationsinformationen und einer ersten Anfordererkennung in dem Übertragungspaket, Prüfen des Übertragungspakets basierend auf einem Inhalt des ersten Sicherheitselements und Bestimmen, dass das Übertragungspaket gültig ist, nachdem die Prüfung gelingt.

8. PCIe-Bus, wobei die PCIe-Sicherheitssteuerungsvorrichtung nach einem der Ansprüche 5 bis 7 auf einen Stammknoten oder einen Kind-Elternknoten in einem PCIe-Topologiebaum, der dem PCIe-Bus entspricht, angewandt wird.

9. Elektronisches Gerät, umfassend den PCIe-Bus nach Anspruch 8, wobei ein Endpunktgerät über den PCIe-Bus mit einem Speicher des elektronischen Geräts verbunden ist.

## Revendications

1. Procédé de transmission de données, appliqué à un nœud racine ou à un nœud parent-enfant dans une arborescence de topologie d'interconnexion de composants périphériques express, PCIe, correspondant à un bus PCIe, dans lequel le procédé comprend :
la réception (S101) d'un paquet de transmission envoyé par un dispositif d'envoi, dans lequel le dispositif d'envoi comprend l'un quelconque du nœud racine, du nœud parent-enfant ou d'un dispositif de point d'extrémité, le dispositif de point d'extrémité est connecté au nœud racine ou au nœud parent-enfant, et le nœud racine est connecté à un gestionnaire de mémoire système ; et
lors de la détermination, sur la base d'informations de configuration de sécurité pré-obtenues, que le paquet de transmission est valide, la transmission (S102) du paquet de transmission à un dispositif suivant, dans lequel le paquet de transmission est un paquet de paquet de couche de transaction, TLP ;
dans lequel avant la détermination, sur la base d'informations de configuration de sécurité pré-obtenues, que le paquet de transmission est valide, le procédé comprend également :
l'obtention d'une demande d'accès à la configuration et lors de la détermination que la demande d'accès à la configuration provient d'un système d'exploitation dans un environnement d'exécution approuvé, TEE,
l'obtention des informations de configuration de sécurité transportées dans la demande d'accès à la configuration, dans lequel la demande d'accès à la configuration est un paquet TLP ; ou
l'obtention d'un paquet de configuration dans un espace de configuration du nœud racine ou du nœud parent-enfant, dans lequel le paquet de configuration comprend des informations de contrôle de sécurité, et lors de la détermination que les informations de contrôle de sécurité sont valides, l'obtention des informations de configuration de sécurité transportées dans le paquet de configuration, dans lequel le paquet de configuration est un paquet TLP ; ou
l'obtention d'un paquet de mémoire généré par un processeur CPU, dans lequel le paquet de mémoire comprend un paquet de mémoire qui transporte des informations de contrôle de sécurité, et lors de la détermination que les informations de contrôle de sécurité sont valides, l'obtention des informations de configuration de sécurité transportées dans le paquet de mémoire, dans lequel le paquet de mémoire est un paquet TLP.

2. Procédé selon la revendication 1, dans lequel une adresse de destination du paquet de transmission est le nœud racine, et les informations de configuration de sécurité comprennent un ou plusieurs identifiants de demandeur à mettre en correspondance ; et
la détermination, sur la base d'informations de configuration de sécurité pré-obtenues, que le paquet de transmission est valide comprend : lors de la détermination qu'un premier identifiant de demandeur dans le paquet de transmission est l'un des un ou plusieurs identifiants de demandeur à mettre en correspondance, la détermination que le paquet de transmission est valide.

3. Procédé selon la revendication 1, dans lequel une adresse de destination du paquet de transmission est le nœud racine, et les informations de configuration de sécurité comprennent un ou plusieurs identifiants de demandeur à mettre en correspondance et un ou plusieurs éléments de sécurité qui sont en correspondance biunivoque avec les un ou plusieurs identifiants de demandeur à mettre en correspondance ; et
la détermination, sur la base d'informations de configuration de sécurité pré-obtenues, que le paquet de transmission est valide comprend :
la recherche d'un premier élément de sécurité par indexation sur la base des informations de configuration de sécurité et d'un premier identifiant de demandeur dans le paquet de transmission, la vérification du paquet de transmission sur la base du contenu du premier élément de sécurité et la détermination que le paquet de transmission est valide après la réussite de la vérification.

4. Procédé selon la revendication 1, dans lequel une adresse de destination du paquet de transmission est le dispositif de point d'extrémité, et les informations de configuration de sécurité comprennent un ou plusieurs numéros de port racine à mettre en correspondance ; et
la détermination, sur la base d'informations de configuration de sécurité pré-obtenues, que le paquet de transmission est valide comprend : lors de la détermination qu'un premier numéro de port racine dans le paquet de transmission est l'un des un ou plusieurs numéros de port racine à mettre en correspondance, la détermination que le paquet de transmission est valide.

5. Appareil de commande de sécurité d'interconnexion de composants périphériques express, PCIe, appliqué à un nœud racine ou à un nœud parent-enfant dans une arborescence de topologie PCIe correspondant à un bus PCIe, l'appareil comprenant :
une unité de réception (3101), configurée pour recevoir un paquet de transmission envoyé par un dispositif d'envoi, dans lequel le dispositif d'envoi comprend l'un quelconque du nœud racine, du nœud parent-enfant ou d'un dispositif de point d'extrémité, le dispositif de point d'extrémité est connecté au nœud racine ou au nœud parent-enfant, et le nœud racine est connecté à un gestionnaire de mémoire système ; et
une unité de traitement (3102), configurée pour : lors de la détermination, sur la base d'informations de configuration de sécurité pré-obtenues, que le paquet de transmission est valide, transmettre le paquet de transmission à un dispositif suivant à travers une unité d'envoi, dans lequel le paquet de transmission est un paquet de paquet de couche de transaction, TLP ;
avant la détermination, sur la base d'informations de configuration de sécurité pré-obtenues, que le paquet de transmission est valide, l'unité de traitement est également configurée pour : obtenir une demande d'accès à la configuration, et lors de la détermination que la demande d'accès à la configuration provient d'un système d'exploitation dans un environnement d'exécution approuvé, TEE,
obtenir les informations de configuration de sécurité transportées dans la demande d'accès à la configuration, dans lequel la demande d'accès à la configuration est un paquet TLP ; ou
obtenir un paquet de configuration dans un espace de configuration du nœud racine ou du nœud parent-enfant, dans lequel le paquet de configuration comprend des informations de contrôle de sécurité, et lors de la détermination que les informations de contrôle de sécurité sont valides, obtenir les informations de configuration de sécurité transportées dans le paquet de configuration, dans lequel le paquet de configuration est un paquet TLP ; ou
obtenir un paquet de mémoire généré par un CPU, dans lequel le paquet de mémoire comprend un paquet de mémoire qui transporte des informations de contrôle de sécurité, et lors de la détermination que les informations de contrôle de sécurité sont valides, obtenir les informations de configuration de sécurité transportées dans le paquet de mémoire, dans lequel le paquet de mémoire est un paquet TLP.

6. Appareil de commande de sécurité PCIe selon la revendication 4, dans lequel une adresse de destination du paquet de transmission est le nœud racine, et les informations de configuration de sécurité comprennent un ou plusieurs identifiants de demandeur à mettre en correspondance ; et
l'unité de traitement est spécifiquement configurée pour : lors de la détermination qu'un premier identifiant de demandeur dans le paquet de transmission est l'un des un ou plusieurs identifiants de demandeur à mettre en correspondance, déterminer que le paquet de transmission est valide.

7. Appareil de commande de sécurité PCIe selon la revendication 5, dans lequel une adresse de destination du paquet de transmission est le nœud racine, et les informations de configuration de sécurité comprennent un ou plusieurs identifiants de demandeur à mettre en correspondance et un ou plusieurs éléments de sécurité qui sont en correspondance biunivoque avec les un ou plusieurs identifiants de demandeur à mettre en correspondance ; et
l'unité de traitement est spécifiquement configurée pour : rechercher un premier élément de sécurité par indexation sur la base des informations de configuration de sécurité et **d'un** premier identifiant de demandeur dans le paquet de transmission, vérifier le paquet de transmission sur la base du contenu du premier élément de sécurité et déterminer que le paquet de transmission est valide après la réussite de la vérification.

8. Bus PCIe, dans lequel l'appareil de commande de sécurité PCIe selon l'une quelconque des revendications 5 à 7 est appliqué à un nœud racine ou à un nœud parent-enfant dans une arborescence de topologie PCIe correspondant au bus PCIe.

9. Dispositif électronique, comprenant le bus PCIe selon la revendication 8, dans lequel un dispositif de point d'extrémité est connecté à une mémoire du dispositif électronique à travers le bus PCIe.
